# EUROPEAN PATENT SPECIFICATION

(11) **EP 0 508 739 B1**
(45) Date of publication and mention of the grant of the patent: **04.12.1996**
(21) Application number: 92303098.5
(22) Date of filing: 08.04.1992
(51) Int. Cl.: G01L 23/10, G01L 23/22

(54) **Device for detecting a change in internal pressure of a cylinder**
Einrichtung zum Erfassen der Änderung im Innendruck eines Zylinders
Dispositif pour détecter le changement de la pression interne dans un cylindre

(30) Priority: 09.04.1991 JP 166941/91; 23.10.1991 JP 305232/91; 06.11.1991 JP 319907/91; 25.04.1991 JP 39033/91
(43) Date of publication of application: 14.10.1992
(60) Divisional application: 95113826.2
(73) Proprietor: NGK SPARK PLUG CO., LTD, Nagoya-shi Aichi-ken (JP)
(72) Inventor: Kojima, Takao, Nagoya-shi, Aichi-ken (JP); Matsubara, Yoshiaki, Nagoya-shi, Aichi-ken (JP); Kondo, Mitsuru, Nagoya-shi, Aichi-ken (JP)
(74) Representative: Jones, Michael Raymond

(56) References cited:
- US-A- 4 566 316
- US-A- 4 602 506
- US-A- 4 686 861

## Description

This invention relates generally to a device for detecting a change in internal pressure of a cylinder and, more specifically, to a mounting structure of a piezoelectric sensor mounted to a cylinder head of an internal combustion engine to detect a change in pressure within the cylinder caused by knocking or fuel injection. The present invention is also directed to a method of the manufacture of a piezoelectric sensor.

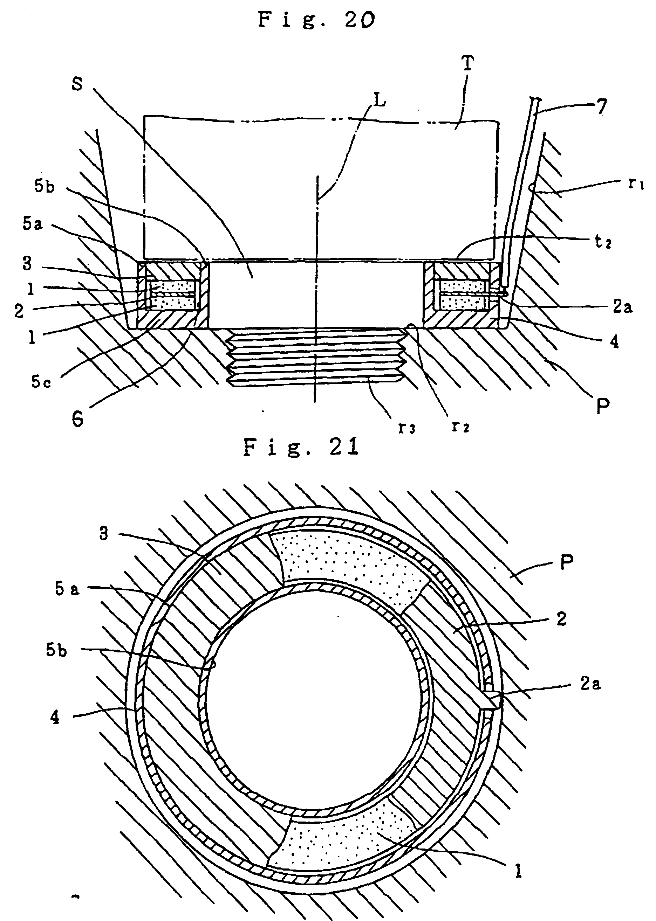

One known internal pressure detecting device is illustrated in Figs. 20 and 21. Designated as S is an annular piezoelectric sensor composed of a metal shell surrounding a laminate including an annular piezoelectric element and upper and lower cushioning rings. The sensor S is fixed on a plug seat r₂ by tightening with an ignition plug T so that the pressure change within the cylinder is transmitted to the sensor S as a mechanical strain to cause the sensor S to output a corresponding electrical signal. More particularly, the cylinder head P is provided with a plug insertion hole r₁ having the plug seat r₂ and an internally threaded portion r₃. The ignition plug T has a stepped portion t₂ engageable with the plug seat r₂ and an externally threaded tip end portion threadingly engageable with the internally threaded portion r₃, so that when the plug T is screwed in the plug hole r₁, the sensor S disposed on the plug seat r₂, optionally through a gasket, is tightly fixed thereon. The shell 4 of the sensor S is composed of an outer ring plate 5a, an inner ring plate 5b and an annular bottom plate 5c by which an annular space 6 is defined. Disposed in the space 6 are a pair of annular piezoelectric elements 1 and 1, an annular electrode plate 2 interposed between the piezoelectric elements 1 and 1, and a top cushioning ring 3. These parts are coaxially aligned and integrally united with an adhesive or by caulking. The electrode ring 2 has a portion 2a which extends radially outwardly through the outer ring plate 5a and to which a lead wire 7 is electrically connected to send an electrical signal from the sensor S to a suitable signal detecting device (not shown).

In the above mounting structure, the sensor S is pressed between the plug seat r₂ of the plug insertion hole r₁ and the stepped portion t₂ of the plug T. Thus, the tightening torque of the plug T is acted on the sensor S directly or indirectly through a gasket. Since such a torque includes both axial compression stress and tortional or twisting stress, the sensor S which has relatively low shearing strength tends to be broken or damaged and its piezoelectric characteristics deteriorate. To cope with this problem, a stopper is disposed for preventing the rotation of the sensor S at the time of the mounting on the cylinder head P. The use of such a stopper, however, is disadvantageous from the standpoint of economy and productivity because the mounting structure becomes unavoidably complicated. Further, the use of a stopper results in the increase in distance between the top surface of the sensor S and the plug seat r₂ so that it becomes difficult to locate the tip end of the plug P, at which spark discharge takes place, at an appropriate position.

US 4566316 discloses a washer-type pressure sensor for attachment to an opening for inserting an ignition plus of an engine. The sensor has a pair of ring piezoelectric elements opposed to each other through a ring electrode, and a first and second pressure receiving plate opposed to each other through the piezoelectric elements and disposed in mechanically and electrically close contact with the piezoelectric elements. An end portion of a cylindrically protecting portion of the first pressure receiving plate is bent toward the second pressure receiving plate to be caulked on a bevelled inner periphery of the second pressure receiving plate so that the electrode plate, piezoelectric element and insulator are fastened between the first and second pressure receiving plates. A protrusion is provided at the outer periphery of the sensor which prevents rotation of the sensor in the plug hole when the ignition plug is screwed into the plug hole.

US 4686861 relates to a pressure sensor mounted on a vibrating body having a piezoelectric element to detect pressure fluctuations, the pressure sensor having a metal case and an integrated body comprising piezoelectric elements and a presser metal portion placed between the piezoelectric element and the seam of the metal case, the seam of the wrapping being placed on the surface under pressure.

The present invention seeks to provide a cylinder internal pressure change detecting device which is devoid of the drawbacks of the known device.

The present invention also seeks to provide a device of the above-mentioned type which does not use a specific stopper and which can prevent a twisting stress from acting on the piezoelectric sensor during the mounting thereof on the cylinder head.

The present invention further seeks to provide a device of the above-mentioned type which is easily fabricated.

The present invention seeks to provide a simple method for fabricating the above piezoelectric sensor.

According to a first aspect of the present invention, there is provided a device for detecting a change in internal pressure of a cylinder, comprising
a cylinder head;
an axially extending ignition plug including a large diameter periphery portion, a small diameter periphery portion extending coaxially from an edge of said large diameter portion to form an annular stepped portion on said edge, and an externally threaded tip end portion coaxially extending from said small diameter periphery portion;
a plug insertion hole formed in said cylinder head for receiving part of said ignition plug and having an internally threaded portion adapted to be in threading engagement with said externally threaded tip end portion of said ignition plug and a plug seat engageable with said annular stepped portion of said ignition plug; and
an annular piezoelectric sensor disposed on said plug seat and having an opening whose diameter is greater than that of said small diameter periphery portion of said ignition plug but smaller than the large diameter periphery portion thereof, so that said ignition plug is capable of being fixed on said cylinder head when screwed into said plug insertion hole with said piezoelectric sensor being tightly pressed between said annular stepped portion of said ignition plug and said plug seat of said plug insertion hole to detect a change in pressure within said cylinder;
said sensor having an outer periphery such that, when said ignition plug is screwed for being fitted to said plug hole, a part of the outer periphery of said sensor placed on said plug seat is brought into engagement with an inside periphery of said plug hole and is thereby prevented from being further rotated in the screwing direction;
characterised in that the piezoelectric sensor includes a shell in the form of a ring composed of a pair of parallel, top and bottom annular walls and a pair of inner and outer tubular walls, and an annular piezoelectric element disposed within said shell, said bottom wall of said shell being formed by radially inwardly bending an end portion of the outer tubular wall and by radially outwardly bending an end portion of the inner tubular wall, the width of said outwardly bent portion being greater than that of said inwardly bent portion, such that the piezoelectric element is evenly supported by the outwardly bent end portion of the inner tubular wall.

According to a second aspect of the present invention, there is provided a method for the production of a piezoelectric sensor, comprising the steps of:
providing a shell in the form of a ring having an annular top plate and a pair of outer and inner tubular plates extending from the outer and inner peripheral edges of said top plate, respectively, in the direction perpendicular to said top plate, said outer and inner edges of said top plate being circular in shape with the center of said outer edge being deviated from that of said inner edge;
providing an annular composite body including an annular layer of a piezoelectric element;
providing an annular bottom plate which matches the annular space defined between said outer and inner tubular plates;
fitting said composite body and said bottom plate in this order in the space between said outer and inner tubular plates with the openings of said composite body and said bottom plate being inserted into said inner tubular plate;
radially outwardly folding an end portion of said inner tubular plate to cover an inner periphery of said bottom plate; and
then radially inwardly folding an end portion of said outer tubular plate to cover an outer periphery of said bottom plate, thereby to integrally tightly unite said composite body and said bottom plate in said shell,
wherein the width of the outwardly bent portion is greater than that of the inwardly bent portion, such that the piezoelectric element is evenly supported by the outwardly bent end portion of the inner tubular wall.

Other features and advantages of the present invention will become apparent from the detailed description of the preferred embodiments of the invention which follows, when considered in the light of the accompanying drawings, in which:
Fig. 1 is a fragmentary, cross-sectional, elevational view diagrammatically showing one arrangement of a cylinder internal pressure change detecting device;
Fig. 2 is a cross-sectional plan view of the device of Fig. 1;
Fig. 3 is a fragmentary, cross-sectional, elevational view, similar to Fig. 1, diagrammatically showing a second arrangement of a cylinder internal pressure change detecting device;
Fig. 4 is a cross-sectional plan view of the device of Fig. 3;
Fig. 5 is a fragmentary, cross-sectional, elevational view, similar to Fig. 1, diagrammatically showing a third arrangement of a cylinder internal pressure change detecting device;
Fig. 6 is a cross-sectional plan view of the device of Fig. 5;
Fig. 7 is a fragmentary, cross-sectional, elevational view, similar to Fig. 1, diagrammatically showing a fourth arrangement of a cylinder internal pressure change detecting device;
Fig. 8 is a cross-sectional plan view of the device of Fig. 7;
Fig. 9 is a fragmentary, cross-sectional, elevational view, similar to Fig. 1, diagrammatically showing an embodiment of a cylinder internal pressure change detecting device according to the present invention;
Fig. 10 is a cross-sectional plan view of the device of Fig. 9;
Fig. 11 is a fragmentary, cross-sectional, elevational view schematically showing the fabrication of the piezoelectric sensor assembly of Fig. 9;
Fig. 12 is a bottom view of the sensor of Fig. 9;
Fig. 13 is a graph showing a relationship between the charge generated in a piezoelectric sensor and the pressure applied to the sensor;
Fig. 14 is a cross-sectional elevational view diagrammatically showing an apparatus useful for assembling a piezoelectric sensor;
Fig. 15 is a fragmentary, cross-sectional, elevational view diagrammatically showing another embodiment of anlapparatus for assembling a piezoelectric sensor;
Fig. 16 is a fragmentary, cross-sectional, elevational view diagrammatically showing a further embodiment of an apparatus for assembling a piezoelectric sensor;
Fig. 17 is a cross-sectional, elevational view diagrammatically showing a further piezoelectric sensor
Fig. 18 is a perspective view schematically showing a top plate of the sensor of Fig. 17;
Fig. 19 is a cross-sectional, elevational view schematically showing a method for impregnating a piezoelectric sensor with a liquid resin composition; embodiment of the present invention;
Fig. 20 is a fragmentary, cross-sectional, elevational view, similar to Fig. 1, diagrammatically showing a conventional pressure change detector; and
Fig. 21 is a cross-sectional, plan view, similar to Fig. 2, of the device of Fig. 20.

### Detailed Description of the Preferred Embodiments of the Invention

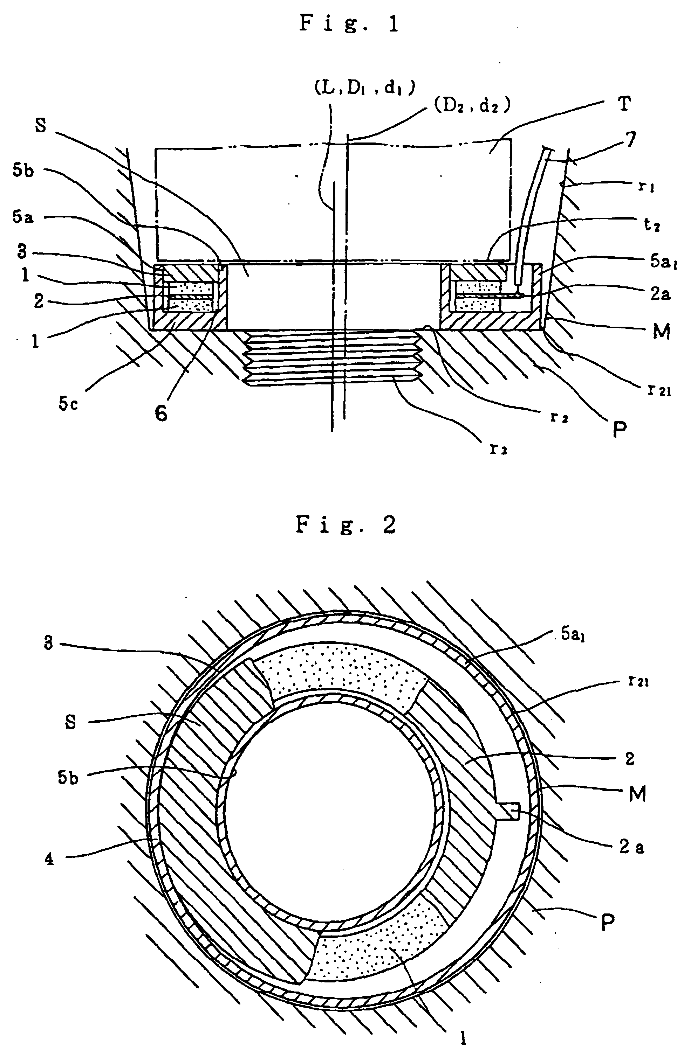

Figs. 1 and 2 depict an arrangement of a cylinder internal pressure detecting device.

In the Figs. 1 and 2 as well as other Figures, the same reference numerals refer to similar component parts. Thus, designated as T is an axially extending ignition plug including a large diameter periphery portion, a small diameter periphery portion extending coaxially from an edge of the large diameter portion to form an annular stepped portion t₂ on the edge, and an externally threaded tip end portion coaxially extending from the small diameter periphery portion. The plug T is arranged to be attached to a plug insertion hole r₁ formed in a cylinder head P.

The plug insertion hole r₁ has an internally threaded portion r₃ adapted to be in threading engagement with the externally threaded tip end portion of the ignition plug T and a plug seat r₂ engageable with the annular stepped portion t₂ of the ignition plug T.

Disposed on the plug seat r₂ is an annular piezoelectric sensor S having an opening whose diameter is greater than that of the small diameter periphery portion of the ignition plug T but smaller than the large diameter periphery portion thereof, so that when the ignition plug T is screwed into the plug insertion hole r₁ the piezoelectric sensor S is tightly pressed between the annular stepped portion t₂ of the ignition plug T and the plug seat r₂ of the plug insertion hole r₁.

The sensor S and the plug insertion hole r₁ are shaped so that when the ignition plug T is screwed for being fitted to the plug hole r₁, part of the outer periphery of the sensor S placed on the plug seat r₂ is brought into engagement with an inside periphery of the plug hole r₁ and is thereby prevented from being further rotated in the screwing direction. Namely, the sensor S has such a portion M in the outer periphery 5a thereof that the distance between the portion M and the rotational axis L is greater than the shortest distance between the inside periphery of the insertion hole r₁ extending from the plug seat r₂ and the rotational axis L.

In the arranqement shown in Figs. 1 and 2, the plug hole r₁ has a circular cross section and has a central axis D₂ which is deviated from the central axis D₁ of the internally threaded portion r₃. The central axis D₁ serves as a rotational axis L of the ignition plug T. The sensor S has a circular outer ring plate 5a₁ whose center axis d₂ is deviated from the center axis d₁ of the inner ring plate 5b. The axes d₁ and d₂ coincide with the axes D₁ and D₂, respectively. Further the diameter of the sensor S is smaller than that of the circular inside periphery r₂₁ extending from the plug seat r₂ but is larger than the shortest distance between the rotation axis L and the inner periphery r₂₁ so that the outer periphery 5a₁ of the sensor S has a portion M which is engageable with the inside peripheral portion r₂₁ of the plug insertion hole r₁ upon rotation thereof about the axis L of the internally threaded portion r₃ of the plug insertion hole r₁.

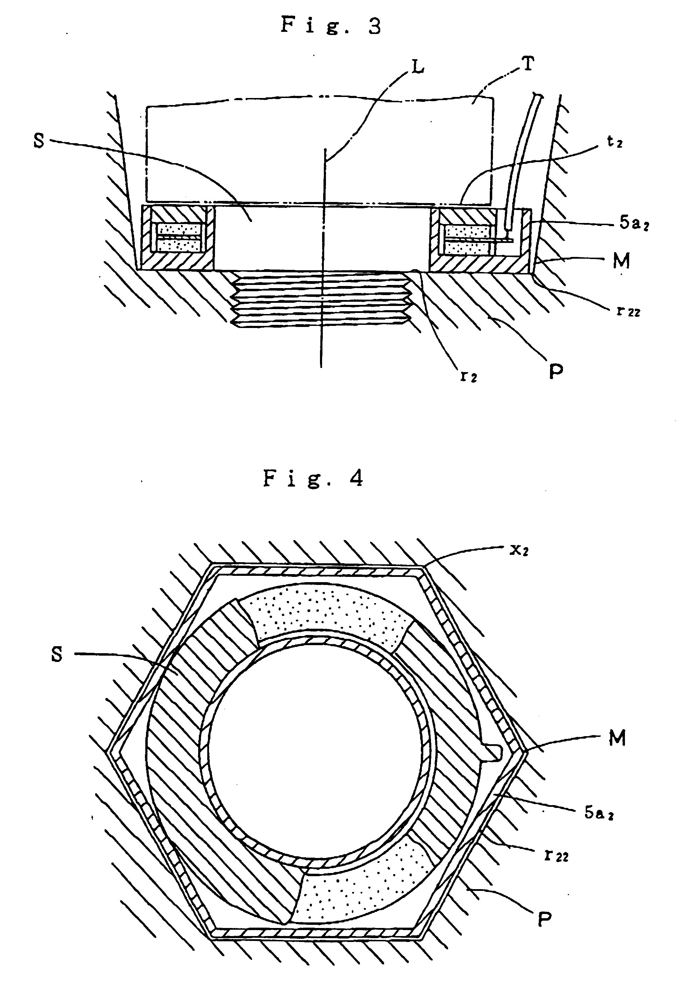

In the arrangement shown in Figs. 3 and 4, the sensor S has a polygonal (hexagonal in the specific embodiment shown) outer periphery 5a₂ and the plug insertion hole r₁ has a polygonal (hexagonal in this embodiment) inside peripheral portion r₂₂ extending the plug seat r₂ so that the outer periphery 5a₂ of the sensor S has a portion M which is engageable with the inside peripheral portion r₂₂ of the plug insertion hole r₁ upon rotation thereof about the axis L of the internally threaded portion r₃ coaxially formed in the plug insertion hole r₁.

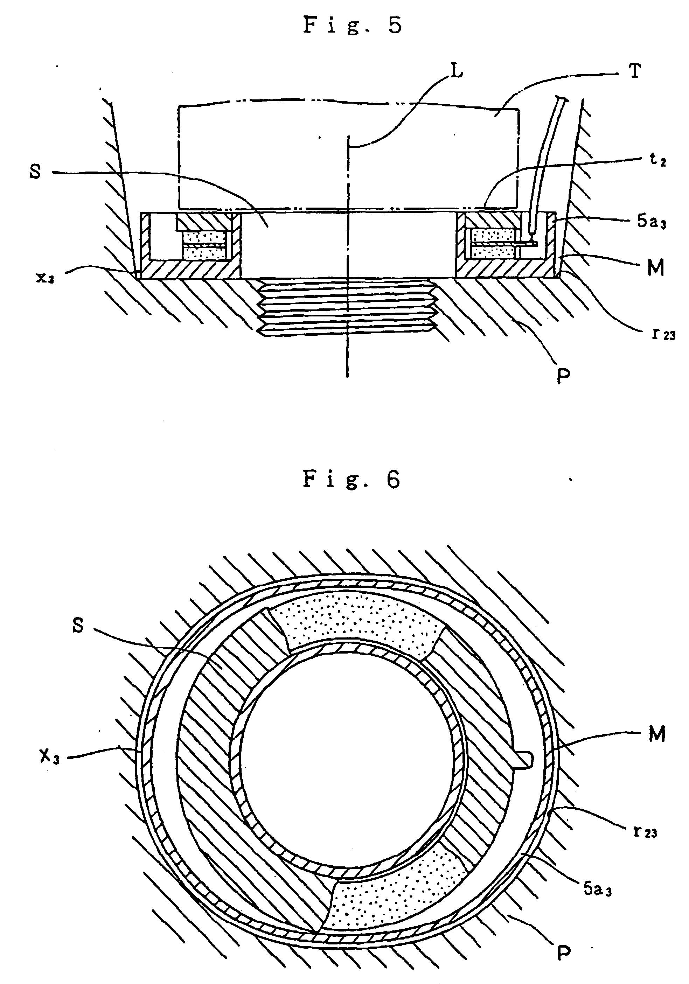

In the arrangement shown in Figs. 5 and 6, the sensor S has an ellipsoidal outer periphery 5a₃ and the plug insertion hole r₁ has an ellipsoidal inside peripheral portion r₂₃ extending from the plug seat r₂ so that the outer periphery 5a₃ of the sensor S has a portion M which is engageable with the inside peripheral portion r₂₃ of the plug insertion hole 1 upon rotation thereof about the axis L of the internally threaded portion r₃ of the plug insertion hole r₁.

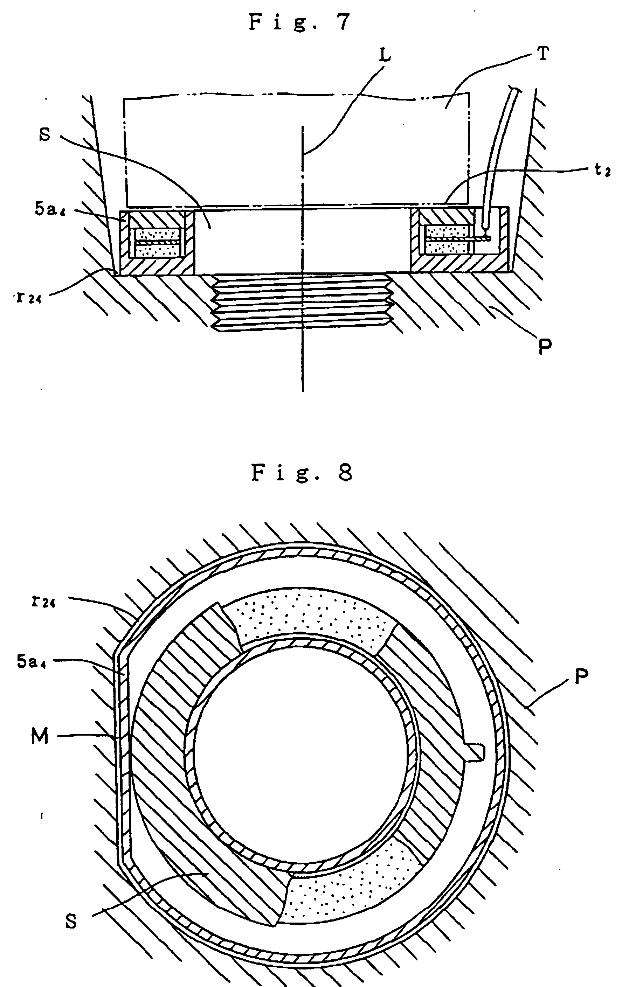

In the arrangement shown in Figs. 7 and 8, the sensor S has a D-shaped outer periphery 5a₄. Namely, the outer periphery of the sensor S is circular in shape with an arc portion being cut away therefrom. The plug insertion hole r₁ too has a D-shaped inside peripheral portion r₂₄ so that the outer periphery 5a₄ of the sensor S has a portion M which is engageable with the inside peripheral portion r₂₄ of the plug insertion hole r₁ upon rotation thereof about the axis L of the internally threaded portion r₃ of the plug insertion hole r₁.

In lieu of forming the cut-away portion in the above embodiment, it is possible to provide a radially outwardly protruded portion on the outer periphery 5a of the circular sensor S. By this, the protruded portion is engageable with an inside peripheral portion r₂₄ of the plug insertion hole r₁ upon rotation thereof about the axis L of the internally threaded portion r₃ of the plug insertion hole r₁.

In the foregoing arrangements- shown in Figs. 1-8, when the ignition plug T is screwed into the insertion hole r₁ with the sensor S being placed on the plug seat r₂, the stepped portion t₂ of the plug T is brought into frictional contact with the upper surface of the sensor S and urges the sensor S to rotate in the screwing direction. When the portion M of the outer surface 5a₁-5a₄ is engaged with the inside periphery r₂₁-r₂₄ extending from the plug seat r₂, however, a further rotation of the sensor S is prevented so that only the compression force is applied to the sensor S by screwing the plug T, ensuring the proper pressure detection by the sensor S.

In the foregoing arrangements the space between the metal shell 4 and the laminate including the piezoelectric elements 2 may be filled with a heat-resisting, electrically insulating material such as an epoxy resin composition, if desired.

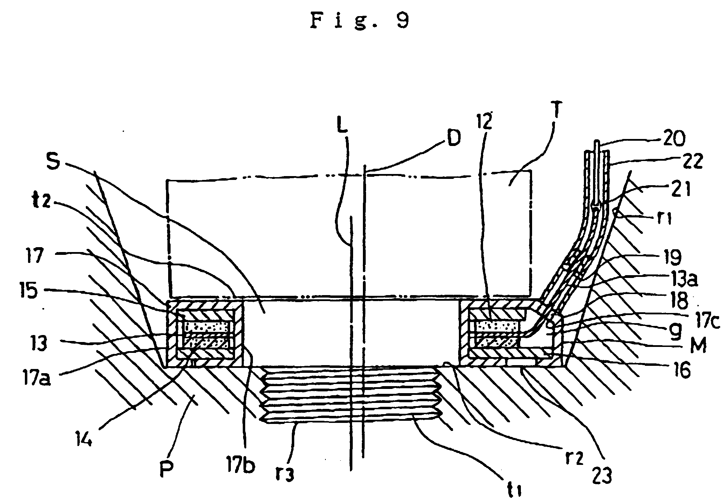

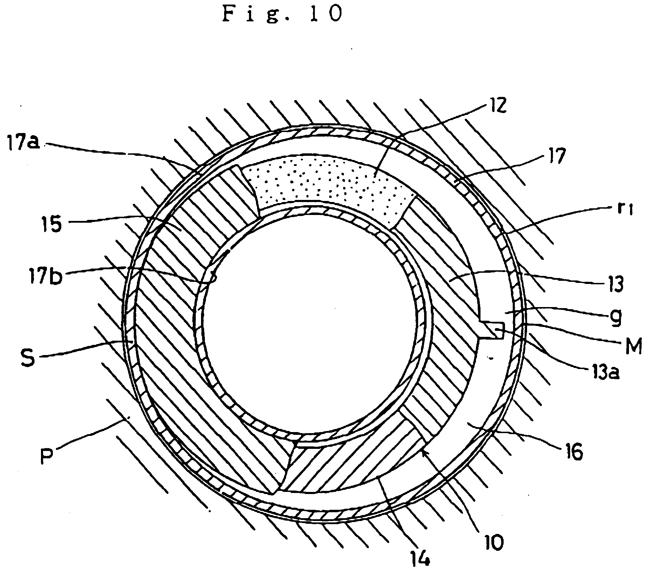

Figs. 9 and 10 illustrate an embodiment of the present invention similar to the arrangement of Figs. 1 and 2. In this embodiment, the sensor S includes a ring-shaped shell 17 composed of a pair of parallel, top and bottom annular walls and a pair of outer and inner tubular walls 17a and 17b. Disposed within the shell 17 is a laminate 10 including an annular piezoelectric element 12, a ring electrode 13, an insulating ring plate 14 formed, for example, of alumina, an annular, top plate 15 formed of a metal such as aluminum or stainless steel, and an annular bottom plate 16 formed of a metal similar to the plate 15. The bottom wall of the shell 17 is formed by radially inwardly bending an end portion of the outer tubular wall and by radially outwardly bending an end portion of the inner tubular wall such that the laminate 10 is tightly held within the shell 17 with an abutting portion or aperture 23 being positioned in the bottom of the shell 17. The corner edges of the top and bottom plates 15 and 16 may be rounded so as to improve the close contact between the laminate 10 and the shell 17.

Similar to the arrangement shown in Figs. 1 and 2, the cylinder head P has a plug hole r₁ which has a circular cross section and whose central axis D is deviated from the central axis L of the internally threaded portion r₃ into which a plug T is to be threadingly fitted. The outer tubular wall 17a of the sensor S has a circular outer periphery whose center axis is deviated from the center axis of the inner tubular wall 17b. The central axes of the outer and inner walls 17a and 17b of the sensor S coincide with the axes D and L, respectively. Further, the diameter of the outer tubular wall 17a of the sensor S is smaller than or equal to that of the circular inside periphery extending from the plug seat r₂ so that the outer periphery of the sensor S has a portion M which is engageable with the inside peripheral portion of the plug insertion hole r₁ upon rotation thereof about the axis L of the internally threaded portion r₃ of the plug insertion hole r₁.

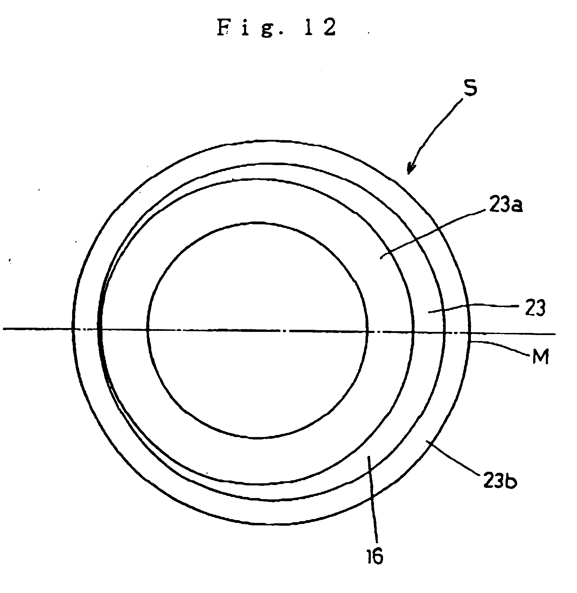

As seen from Fig. 12 showing a bottom view, the sensor S has an annular shape whose radial width varies throughout. The bottom plate 16 is eccentric and extends throughout the inside bottom wall of the sensor S while the top plate 15 is concentric and has the same diameter as that of the laminate 10.

As a result of the above construction, there is defined a space g between the outer periphery of the laminate 10 and the outer tubular wall 17a of the shell. This space g is used to connect a lead wire 10 to the electrode plate 13. Thus, a portion of the edge defined by the top wall and the outer wall 17a of the shell 17 is tapered at a position adjacent to the space g to form a tapered surface 17c. The tapered surface 17c is provided with an opening 18 and with a guide pipe 19 fixed thereto, for example, by soldering. The guide pipe 19 is oriented in the direction normal to the tapered surface 17c which is oriented at an angle of 15° to 45° with respect to the top wall of the sensor S. The guide pipe 19 is bent and vertically extends in the end portion 22. The electrode ring 13 has an extended portion 13a extending through the space g, the opening 18 and the guide pipe 19 and is electrically connected to the lead wire 20 with a solder 21.

The sensor S provided with the above wire leading structure is placed on the plug seat r₂ and is fixed there by screwing the plug T in the threaded portion r₃. In this case, since the guide pipe 19 is obliquely oriented, a sufficient space is available in the plug insertion hole r₁ to insert a tightening tool for the attachment of the plug T to the hole r₁. Since the screwing of the plug T into the hole r₁ does not cause the sensor S to freely rotate, a shearing stress is not acted on the sensor S. In the thus constructed device according to the present invention, when the pressure within the cylinder is changed, this is transmitted to the sensor S through the plug T. The mechanical stress is thus transmitted to the piezoelectric element 12 through the upper and lower plates 15 and 16 so that an electrical signal corresponding to the mechanical stress is outputted from the sensor S and is fed through the electrode ring 13 and lead wire 20 to a suitable signal detector.

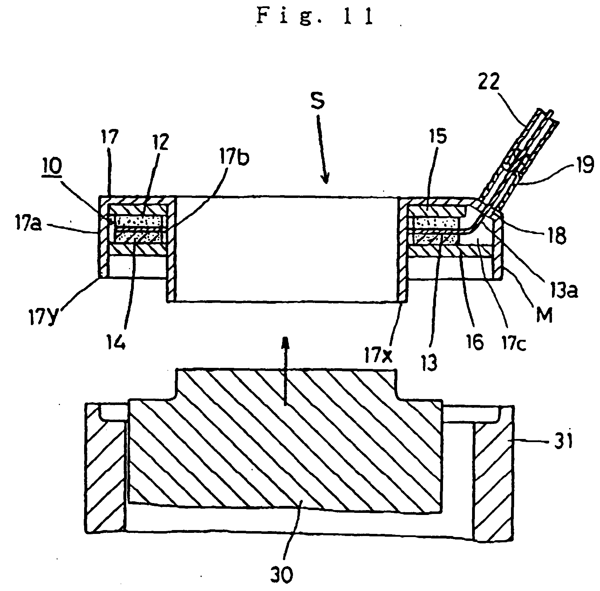

As described previously, the bottom wall of the sensor S is formed by bending end portions of the outer and inner tubular side walls. Fig. 11 illustrates the fabrication of such a sensor S. The outer and inner ring plates 17a and 17b have extensions 17y and 17x, respectively. After the laminate 10 has been fitted into the shell 17, the extensions 17y and 17x are bent and pressed over the bottom plate 16. In this case, the length of the extension 17x is greater than that of the extension 17y and the extension 17x is bent prior to the extension 17y.

When the longer extension 17x is bent by means of press-bending means 30, the bent portion 17x can be tightly pressed against the bottom plate 16 because the space in the shell 17 is filled with the laminate 10. Thus, the laminate 10 can be held in a stable manner in the shell 17 by the bending of the extension 17x. Thereafter, the extension 17y is bent and pressed with the press member 31. In this case, the presence of the space g does not cause movement of the laminate 10 which has been already tightly secured in the shell 17. Thus, the bottom wall can be formed uniformly.

Since the extension 17x is longer than the extension 17y, an inner part 23a of the bottom wall formed by the extension 17x has a wider radial width than that of an outer part 23b formed by the extension 17y as shown in Fig. 12. This is advantage because the piezoelectric element 12 can be evenly supported by the inner part 23a so that the mechanical stress can be uniformly applied to the element 12, thereby ensuring satisfactory responsibility.

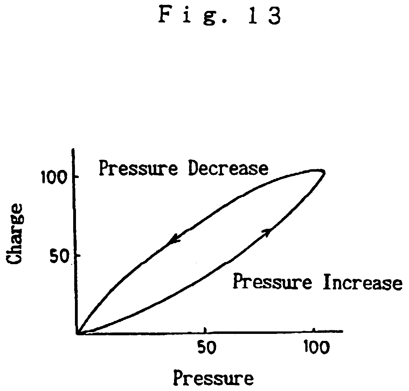

When the outer part 23b is wider than the inner part 23a, a hysteresis has been found to be caused in pressure response of the sensor S. Namely, as shown in Fig. 13, the charge generated at a given pressure in the course of a pressure increase stage is not the same as that in the course of a pressure decrease stage. Similar tendency is observed when the widths of the inner and outer parts 23a and 23b are equal to each other. Such a hysteresis is considered to be attributed to the fact that the pressure is not uniformly applied to the piezoelectric element because of non-uniformity of the structure of the bottom wall of the shell supporting the piezoelectric element.

The bent portions 17x and 17y are present in the bottom of the sensor S, since the aperture 23 between the inner and outer parts 23a and 23b can be entirely faced to the plug seat r₂ and the entire bottom wall can be contacted with the plug seat r₂, whereby the piezoelectric element 12 can uniformly receive the mechanical stress.

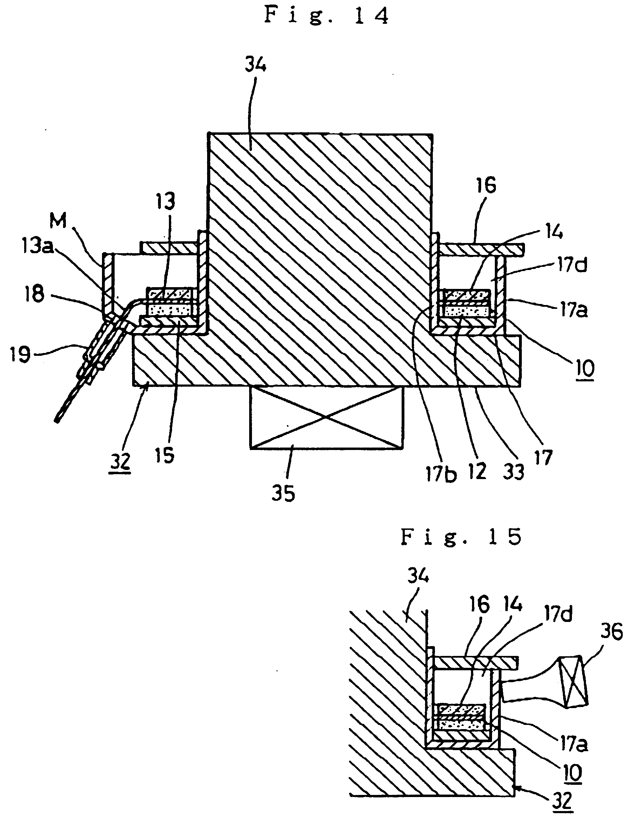

In the assembling of the sensor S of the above construction, it is necessary that the eccentric, bottom plate 16 be positioned in a specific position relative to the shell 17 in order to fit the plate 16 into the shell 17. Figs. 14 and 15 illustrate a suitable method for the fitting of the bottom plate 16. First, a shell 17 in the form of a ring having an annular plate and a pair of outer and inner tubular plates 17a and 17b extending from the outer and inner peripheral edges of the annular plate, respectively, in the direction perpendicular to the plate is provided. The outer and inner plates 17a and 17b are circular in cross section and the centers thereof are deviated from each other. The length of the inner plate 17a is greater than that of the outer plate 17b.

The shell 17 constructed as above and bearing the laminate 10 is fitted to a vibrator 32 with the open end portion thereof being oriented upward. The vibrator 32 has a base portion 33 from which a circular guide 34 extends upward. The base portion 33 has a drive member 35 operable to cause the vibrator 32 to vibrate. The shell 17 is placed on the vibrator 32 with the guide 34 being inserted into the inner tubular plate 17b. Then, an annular plate 16 which matches the annular space 17d defined between the outer and inner plates 17a and 17b is fitted on the guide 34. Then the drive means 35 is operated to vibrate the vibrator 32. This causes the annular plate 16 to rotate about the guide 34. When the annular plate 16 is positioned so that the outer periphery thereof matches the shape of the annular space 17d of the shell, the plate 16 falls within the space 17d by gravity.

The driving of the vibrator 32 may be effected by any other suitable means as long as the annular plate 16 placed on the shell 17 can be rotated about the guide 34. Fig. 15 depicts another type of drive means. Designated as 36 is a horn-type vibrator utilizing a piezoelectric element. The tip end portion of the vibrator 36 is contacted with the shell 17 to rotate the plate 16 and to position the plate 16 so as to fit into the annular space 17d of the shell 17.

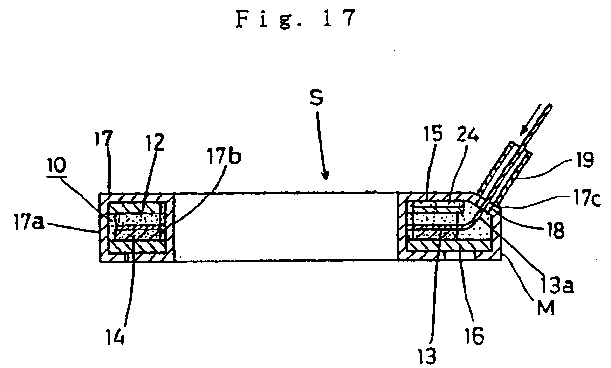

Thereafter, the inner and outer tubular plates 17b and 17a are bent and pressed as described above to obtain a sensor S as shown in Fig. 17.

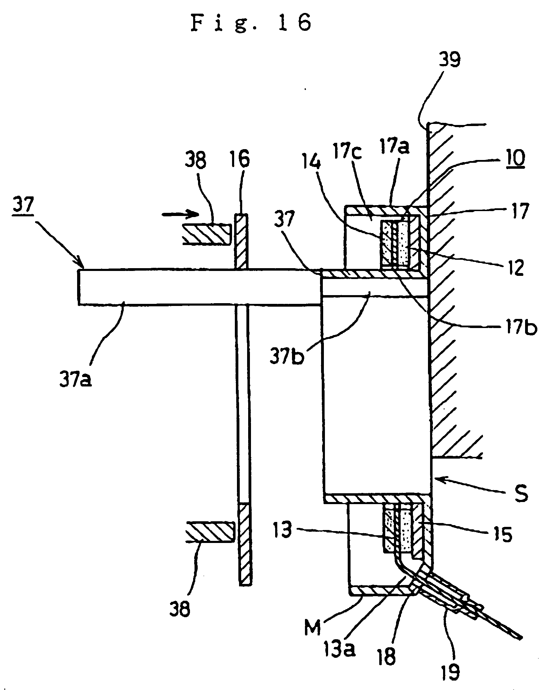

Fig. 16 illustrates another method for easily fitting the eccentric, annular plate 16 into the shell 17. Designated as 37 is a rod with a circular cross section supported in a horizontal position to a support wall 39. The rod 37 has a smaller diameter portion 37b and a coaxial, larger diameter portion 37a between which a stepped portion 37c is formed. The difference in diameter between the smaller and larger diameter portions 37b and 37a is made equal to the thickness of the inner tubular plate 17b. In assembling, the shell 17 bearing the laminate 10 other than the eccentric, annular plate 16 is suspended from the smaller diameter portion 37b of the horizontal rod 37. Because of the eccentricity, the shell 17 and the annular plate 16 are spontaneously positioned with their centers of gravity being vertically aligned. Namely, in the suspended state, the line extending through the centers of the inner and outer tubular plates 17b and 17a and the line extending through the centers of the inside and outside peripheries of the annular plate 16 coincide with the vertical line passing the central axis of the rod 37. As a result, when the annular plate 16 is displaced by means of a push rod 38 in the direction shown by the arrow, the plate 16 is fitted into the shell 17. Then, the inner and outer tubular plates 17b and 17a are bent over the annular plate 16 and pressed to tightly hold the laminate 10 to obtain the sensor S shown in Fig. 17.

In order to ensure the insulation between respective parts in the shell 17, it is desirable to fill the space in the shell 17 with a resin. Since the both sides of the laminate 10 are in pressure contact with the shell 17, it is difficult to fill the entire space in the shell 17 with the insulating resin. Especially, the gap between the inside tubular wall 17b and the inside periphery of the laminate 10 cannot be impregnated with the resin after the fabrication of the sensor S.

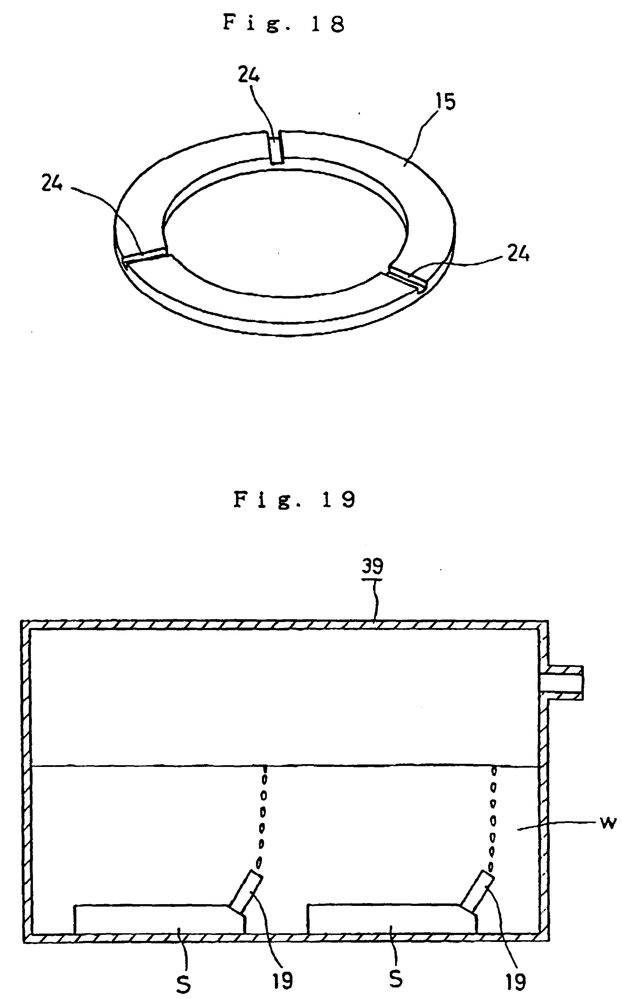

Thus, in a preferred embodiment according to the present invention as shown in Fig. 18, at least one of the top and bottom annular plates 15 and 16 (the top plate 15 in the illustrated embodiment) is formed with a plurality (three in the illustrated embodiment) of angularly equally spaced apart, radially extending grooves 24. The grooves form passages together with the top wall of the shell 17, through which passages the space defined between the outer tubular plate 17a and the laminate 10 is in fluid communication with the space defined between the inner tubular plate 17b and the laminate 10.

When the sensor S thus constructed is immersed in a liquid resin composition w contained in a tank 39, as shown in Fig. 19, the resin can enter the space in the shell 17 through the guide pipe 19 and the grooves 24 into the gap around the inner tubular plate 17b. Since two or more grooves 24 are provided in the top plate 15, at lest one passage can be always feasible irrespective of the position of the top plate 15 so that the entire space within the shell can be surely filled with the resin. The liquid resin is subsequently hardened to provide desired electrical insulation. The number of the grooves is preferably 3 or more for reasons of facilitating replacement of the air with the liquid resin.

## Claims

1. A device for detecting a change in internal pressure of a cylinder, comprising
a cylinder head (P);
an axially extending ignition plug (T) including a large diameter periphery portion, a small diameter periphery portion extending coaxially from an edge of said large diameter portion to form an annular stepped portion (t₂) on said edge, and an externally threaded tip end portion coaxially extending from said small diameter periphery portion;
a plug insertion hole (r₁) formed in said cylinder head (P) for receiving part of said ignition plug (T) and having an internally threaded portion (r₃) adapted to be in threading engagement with said externally threaded tip end portion of said ignition plug (T) and a plug seat (r₂) engageable with said annular stepped portion (t₂) of said ignition plug (T); and
an annular piezoelectric sensor (S) disposed on said plug seat (r₂) and having an opening whose diameter is greater than that of said small diameter periphery portion of said ignition plug (T) but smaller than the large diameter periphery portion thereof, so that said ignition plug (T) is capable of being fixed on said cylinder head (P) when screwed into said plug insertion hole (r₁) with said piezoelectric sensor (S) being tightly pressed between said annular stepped portion (t₂) of said ignition plug (T) and said plug seat (r₂) of said plug insertion hole (r₁) to detect a change in pressure within said cylinder;
said sensor (S) having an outer periphery such that, when said ignition plug (T) is screwed for being fitted to said plug hole (r₁), a part of the outer periphery of said sensor (S) placed on said plug seat (r₂) is brought into engagement with an inside periphery of said plug hole (r₁) and is thereby prevented from being further rotated in the screwing direction;
characterised in that the piezoelectric sensor (S) includes a shell (17) in the form of a ring composed of a pair of parallel, top and bottom annular walls (15, 16) and a pair of inner and outer tubular walls (17a, 17b), and an annular piezoelectric element (12) disposed within said shell, said bottom wall (16) of said shell (17) being formed by radially inwardly bending an end portion of the outer tubular wall and by radially outwardly bending an end portion of the inner tubular wall, the width of said outwardly bent portion (17x) being greater than that of said inwardly bent portion (17y), such that the piezoelectric element (12) is evenly supported by the outwardly bent end portion (17x) of the inner tubular wall.

2. A device as set forth in claim 1, wherein said sensor (S) has a polygonal outer periphery (5a₁) and said plug insertion hole (r₁) has a polygonal inside peripheral portion (r₂₂) so that the outer periphery (5a₁) of said sensor (S) is engageable with said inside peripheral portion (r₂₂) of said plug insertion hole (r₁) upon rotation thereof about the axis (L) of said internally threaded portion (r₃) of said plug insertion hole (r₁).

3. A device as set forth in claim 1, wherein said sensor (S) has an ellipsoidal outer periphery (5a₃) and said plug insertion hole (r₁) has an ellipsoidal inside peripheral portion (r₂₃) so that the outer periphery (5a₃) of said sensor (S) is engageable with said inside peripheral portion (r₂₃) of said plug insertion hole (r₁) upon rotation thereof about the axis (L) of said internally threaded portion (r₃) of said plug insertion hole (r₁).

4. A device as set forth in claim 1, wherein said sensor (S) has a D-shaped outer periphery (5a₄) and said plug insertion hole (r₁) has a D-shaped inside peripheral portion (r₂₄) so that the outer periphery (5a₄) of said sensor (S) is engageable with said inside peripheral portion (r₂₄) of said plug insertion hole (r₁) upon rotation thereof about the axis (L) of said internally threaded portion (r₃) of said plug insertion hole (r₁).

5. A device as set forth in claim 1, wherein the distance between said part of said sensor (S) and the center axis (L) of said internally threaded portion (r₃) of said plug insertion hole (r₁) is longer than the distance between said center axis (L) of said internally threaded portion (r₃) and said inside peripheral portion of said plug insertion hole (r₁) so that said part of said sensor is engageable with said inside peripheral portion of said plug insertion hole upon rotation thereof about the axis of said internally threaded portion (r₃) of said plug insertion hole (r₁).

6. A device as set forth in claim 1, wherein said plug insertion hole (r₁) has a circular inside peripheral portion whose center axis (D) is deviated from the axis (L) of said internally threaded portion (r₃) of said plug hole and said sensor (S) has a circular outer periphery substantially equal to or slightly smaller than said circular inside peripheral portion of said plug insertion hole so that the outer periphery of said sensor (S) is engageable with said inside peripheral portion of said plug insertion hole (r₁) upon rotation thereof about the axis (L) of said internally threaded portion (r₃) of said plug insertion hole (r₁).

7. A device as set forth in claim 1, wherein said
annular piezoelectric element (12) is disposed within said shell (17) to define a space (g) between the outer periphery thereof and said outer tubular wall (17a) of said shell (17); and
a lead wire (10) is electrically connected to said piezoelectric element (12) at a location adjacent to said space (g) and extending through said top annular wall of said shell (17).

8. A device as set forth in claim 6, wherein said
annular piezoelectric element (12) is disposed within said shell (17) to define a space (g) between the outer periphery thereof and said outer tubular wall (17a) of said shell (17), a portion of the edge defined by said top wall and said outer wall (17a) being tapered at a position adjacent to said space (g) to form a tapered surface (17c);
a guide pipe (19) is connected to said tapered surface (17c) and oriented in the direction normal to said tapered surface (17c); and
a lead wire (20) is electrically connected to said piezoelectric element (12) at a location adjacent to said space (g) and extending through said tapered surface (17c) and through said guide pipe (19).

9. A device as set forth in claim 6, wherein said
annular piezoelectric element (12) is disposed within said shell (17) to define a space (g) between the outer periphery thereof and said outer tubular wall (17a) of said shell (17);
an annular bottom plate (16) is disposed between said bottom wall of said shell and said piezoelectric element and extending throughout the inside surface of said bottom wall;
an annular top plate (15) is disposed between said top wall of said shell (17) and said piezoelectric element (12); and
a lead wire (10) is electrically connected to said piezoelectric element (12) at a position adjacent to said space and extending through an upper opening (19) provided in said top wall,
at least one of said top and bottom plates (15, 16) having at least two, radially extending, angularly equally spaced apart grooves (24) so that when said sensor is immersed in a liquid resin composition, the composition can flow through said upper opening (19) and said grooves (24) and can fill the entire space in said shell (17).

10. A method for the production of a piezoelectric sensor, comprising the steps of:
providing a shell (17) in the form of a ring having an annular top plate and a pair of outer and inner tubular plates (17a, 17b) extending from the outer and inner peripheral edges of said top plate, respectively, in the direction perpendicular to said top plate, said outer and inner edges of said top plate being circular in shape with the center of said outer edge being deviated from that of said inner edge;
providing an annular composite body including an annular layer of a piezoelectric element (12);
providing an annular bottom plate (16) which matches the annular space (17d) defined between said outer and inner tubular plates (17a, 17b);
fitting said composite body and said bottom plate (16) in this order in the space (17d) between said outer and inner tubular plates (17a, 17b) with the openings of said composite body and said bottom plate (16) being inserted into said inner tubular plate (17b);
radially outwardly folding an end portion of said inner tubular plate (17b) to cover an inner periphery of said bottom plate (16); and
then radially inwardly folding an end portion of said outer tubular plate (17a) to cover an outer periphery of said bottom plate (16), thereby to integrally tightly unite said composite body and said bottom plate in said shell,
wherein the width of the outwardly bent portion is greater than that of the inwardly bent portion, such that the piezoelectric element (12) is evenly supported by the outwardly bent end portion of the inner tubular wall (17b).

11. A method as set forth in claim 10, wherein said fitting of said bottom plate (16) in said space (17d) is performed by positioning said bottom plate (16) adjacent to said space (17d) of said shell (17) with said inner tubular plate (17b) being loosely fitted into the opening of said bottom plate (16), said shell (17) being placed with said top plate thereof being oriented downward, and said shell (17) being vibrated to cause said bottom plate (16) to rotate about said inner tubular plate until said bottom plate (16) can be fitted into said space (17d).

12. A method as set forth in claim 10, wherein said fitting of said bottom plate (16) in said space (17d) is performed by suspending said shell (17) and said bottom plate (16) from a horizontally extending round rod (37) inserted into each of the openings thereof so that said bottom plate (16) is positioned in the same attitude as that of said space (17d), said bottom plate (16) thus positioned being subsequently displaced along said horizontal rod (37) and inserted into said space (17d).

## Patentansprüche

1. Einrichtung, geeignet zum Erfassen der Innendruckänderung eines Zylinders, umfassend:
einen Zylinderkopf (P),
eine axial verlaufende Zündkerze (T), enthaltend einen Randabschnitt mit großem Durchmesser, einen Randabschnitt mit kleinem Durchmesser, der sich koaxial von einer Kante des Abschnitts mit großem Durchmesser wegerstreckt und an der Kante einen ringförmigen gestuften Abschnitt (t₂) bildet, und einen mit einem Außengewinde versehenen spitzen Endabschnitt, der sich koaxial vom Abschnitt mit kleinem Durchmesser wegerstreckt,
ein im Zylinderkopf (P) ausgebildetes Kerzenloch (r₁) zum Aufnehmen eines Teils der Zündkerze (T), das einen mit einem Innengewinde versehenen Abschnitt (r₃) aufweist, der so eingerichtet ist, daß er mit dem spitzen Endabschnitt der Zündkerze (T), der mit einem Außengewinde versehenen ist, verschraubt werden kann, und einen Kerzensitz (r₂), der in den ringförmigen gestuften Abschnitt (t₂) der Zündkerze (T) eingreifen kann, und
einen ringförmigen piezoelektrischen Sensor (S), der auf dem Kerzensitz (r₂) angeordnet ist und eine Öffnung hat, deren Durchmesser größer ist als der Durchmesser des Randabschnitts der Zündkerze (T) mit kleinem Durchmesser, jedoch kleiner als der Durchmesser des Randabschnitts der Zündkerze mit großem Durchmesser, so daß die Zündkerze (T) auf dem Zylinderkopf (P) befestigt werden kann, wenn sie in das Kerzenloch (r₁) eingeschraubt wird, wobei der piezoelektrische Sensor (S) zwischen dem ringförmigen gestuften Abschnitt (t₂) der Zündkerze (T) und dem Kerzensitz (r₂) des Kerzenlochs (r₁) fest eingepreßt wird, um eine Innendruckänderung innerhalb des Zylinders zu erfassen,
der Sensor (S) einen Außenrand aufweist, so daß, wenn die Zündkerze (T) zur Befestigung in das Kerzenloch (r₁) eingeschraubt wird, ein Teil des Außenrands des Sensors (S), der auf dem Kerzensitz (r₂) angeordnet ist, in einen Innenrand des Kerzenlochs (r₁) eingreift und dadurch daran gehindert wird, sich weiter in Schraubrichtung zu drehen,
dadurch gekennzeichnet, daß der piezoelektrische Sensor (S) ein Gehäuse (17) in Form eines Rings enthält, das aufgebaut ist aus einem Paar paralleler oberer und unterer ringförmiger Wände (15 und 16) und einem Paar innerer und äußerer röhrenförmiger Wände (17a und 17b), und daß ein ringförmiges piezoelektrisches Bauteil (12) innerhalb des Gehäuses angeordnet ist, wobei die untere Wand (16) des Gehäuses (17) geformt wird durch radiales Nach-innen-Biegen eines Endabschnitts der äußeren röhrenförmigen Wand und durch radiales Nach-außen-Biegen eines Endabschnitts der inneren röhrenförmigen Wand, wobei die Breite des nach außen gebogenen Abschnitts (17x) größer ist als die des nach innen gebogenen Abschnitts (17y), so daß das piezoelektrische Bauteil (12) von dem nach außen gebogenen Endabschnitt (17x) der inneren röhrenförmigen Wand gleichmäßig gehalten wird.

2. Einrichtung nach Anspruch 1, wobei der Sensor (S) einen polygonalen Außenrand (5a₁) hat und das Kerzenloch (r₁) einen polygonalen Innenrandabschnitt (r₂₂) aufweist, so daß der Außenrand (5a₁) des Sensors (S) in den Innenrandabschnitt (r₂₂) des Kerzenlochs (r₁) eingreifen kann, wenn der Sensor (S) um die Achse (L) des Abschnitts (r₃) mit Innengewinde im Kerzenloch (r₁) gedreht wird.

3. Einrichtung nach Anspruch 1, wobei der Sensor (S) einen ellipsoidalen Außenrand (5a₃) hat, und das Kerzenloch (r₁) einen ellipsoidalen Innenrandabschnitt (r₂₃) aufweist, so daß der Außenrand (5a₃) des Sensors (S) in den Innenrandabschnitt (r₂₃) des Kerzenlochs (r₁) eingreifen kann, wenn der Sensor (S) um die Achse (L) des Abschnitts (r₃) mit Innengewinde des Kerzenlochs (r₁) gedreht wird.

4. Einrichtung nach Anspruch 1, wobei der Sensor (S) einen D-förmigen Außenrand (5a₄) hat und das Kerzenloch (r₁) einen D-förmigen Innenrandabschnitt (r₂₄) aufweist, so daß der Außenrand (5a₄) des Sensors (S) in den Innenrandabschnitt (r₂₄) des Kerzenlochs (r₁) eingreifen kann, wenn der Sensor (S) um die Achse (L) des Abschnitts (r₃) mit Innengewinde des Kerzenlochs (r₁) gedreht wird.

5. Einrichtung nach Anspruch 1, wobei der Abstand zwischen dem Teil des Sensors (S) und der Mittenachse (L) des Abschnitts (r₃) mit Innengewinde des Kerzenlochs (r₁) größer ist als der Abstand zwischen der Mittenachse (L) des Abschnitts (r₃) mit Innengewinde und dem Innenrandabschnitt des Kerzenlochs (r₁), so daß der Teil des Sensors in den Innenrandabschnitt des Kerzenlochs eingreifen kann, wenn der Sensor um die Achse des Abschnitts (r₃) mit Innengewinde des Kerzenlochs (r₁) gedreht wird.

6. Einrichtung nach Anspruch 1, wobei das Kerzenloch (r₁) einen kreisförmigen Innenrandabschnitt hat, dessen Mittenachse (D) von der Achse (L) des Abschnitts (r₃) mit Innengewinde des Kerzenlochs wegverschoben ist, und der Sensor (S) einen kreisförmigen Außenrand aufweist, der entweder im wesentlich dem kreisförmigen Innenrandabschnitt des Kerzenlochs gleicht oder geringfügig kleiner ist als dieser, so daß der Außenrand des Sensors (S) in den Innenrandabschnitt des Kerzenlochs (r₁) eingreifen kann, wenn der Sensor um die Achse (L) des Abschnitts (r₃) mit Innengewinde des Kerzenlochs (r₁) gedreht wird.

7. Einrichtung nach Anspruch 1, wobei das ringförmige piezoelektrische Bauteil (12) innerhalb des Gehäuses (17) angeordnet ist, um einen Raum (g) zwischen dem Bauteilaußenrand und der äußeren röhrenförmigen Wand (17a) des Gehäuses (17) zu bestimmen; und
ein Leitungsdraht (20) an einer Stelle nahe am Raum (g) elektrisch mit dem piezoelektrischen Bauteil (12) verbunden ist und sich durch die obere ringförmige Wand des Gehäuses (17) erstreckt.

8. Einrichtung nach Anspruch 6, wobei das ringförmige piezoelektrische Bauteil (12) innerhalb des Gehäuses (17) angeordnet ist, um einen Raum (g) zwischen dem Bauteilaußenrand und der äußeren röhrenförmigen Wand (17a) des Gehäuses (17) zu bestimmen, und ein Abschnitt der Kante, die von der oberen Wand und der äußeren Wand (17a) bestimmt wird, an einer Stelle nahe am Raum (g) abgeschrägt ist, um eine abgeschrägte Fläche (17c) zu bilden;
ein Führungsrohr (19) mit der abgeschrägten Fläche (17c) verbunden und senkrecht zur abgeschrägten Fläche (17c) ausgerichtet ist; und
ein Leitungsdraht (20) an einer Stelle nahe am Raum (g) elektrisch mit dem piezoelektrischen Bauteil (12) verbunden ist und sich durch die abgeschrägte Fläche (17c) und durch das Führungsrohr (19) erstreckt.

9. Einrichtung nach Anspruch 6, wobei das ringförmige piezoelektrische Bauteil (12) innerhalb des Gehäuses (17) angeordnet ist, um einen Raum (g) zwischen dem Bauteilaußenrand und der äußeren röhrenförmigen Wand (17a) des Gehäuses (17) zu bestimmen,
eine ringförmige untere Platte (16) zwischen der unteren Wand des Gehäuses und dem piezoelektrischen Bauteil angeordnet ist und sich über die innere Oberfläche der unteren Wand erstreckt;
eine ringförmige obere Platte (15) zwischen der oberen Wand des Gehäuses (17) und dem piezoelektrischen Bauteil (12) angeordnet ist; und
ein Leitungsdraht (20) an einer Stelle nahe am Raum elektrisch mit dem piezoelektrischen Bauteil (12) verbunden ist und sich durch eine obere Öffnung (19) erstreckt, die in der oberen Wand bereitgestellt ist,
zumindest eine der beiden oberen und unteren Platten (15 und 16) mindestens zwei radial verlaufende Nuten (24) mit gleichem Zwischenwinkel aufweist, so daß, wenn der Sensor in eine Weichharzzusammensetzung getaucht wird, die Zusammensetzung durch die obere Öffnung (19) und die Nuten (24) fließen und den gesamten Raum im Gehäuse (17) füllen kann.

10. Verfahren zum Herstellen eines piezoelektrischen Sensors, umfassend die Schritte:
Bereitstellen eines Gehäuses (17) in Form eines Rings, das eine obere ringförmige Platte aufweist und ein Paar äußere und innere röhrenförmige Platten (17a, 17b), die sich von den äußeren bzw. inneren Randkanten der oberen Platte wegerstrecken, und zwar in senkrechter Richtung zur oberen Platte, wobei die äußeren und inneren Kanten der oberen Platte kreisförmig sind und der Mittelpunkt der Außenkante vom Mittelpunkt der Innenkante wegverschoben ist;
Bereitstellen eines ringförmigen Verbundkörpers, der eine ringförmige Schicht aus einem piezoelektrischen Bauteil (12) enthält,
Bereitstellen einer ringförmigen unteren Platte (16), die in den ringförmigen Raum (17d) paßt, der zwischen den äußeren und inneren röhrenförmigen Platten (17a, 17b) bestimmt ist,
Einfügen des Verbundkörpers und der unteren Platte (16) in dieser Reihenfolge in den Raum (17d) zwischen den äußeren und inneren röhrenförmigen Platten (17a, 17b), wobei die Öffnungen des Verbundkörpers und der unteren Platte (16) in die innere röhrenförmige Platte (17b) eingesetzt werden;
radiales Nach-außen-Falten eines Endabschnitts der inneren röhrenförmigen Platte (17b), um den Innenrand der unteren Platte (16) zu bedecken, und
radiales Nach-innen-Falten eines Endabschnitts der äußeren röhrenförmigen Platte (17a), um einen Außenrand der unteren Platte (16) zu bedecken und damit den Verbundkörper und die untere Platte im Gehäuse gemeinsam fest zu vereinen,
wobei die Breite des nach außen gebogenen Abschnitts größer ist als die des nach innen gebogenen Abschnitts, so daß das piezoelektrische Bauteil (12) vom nach außen gebogenen Endabschnitt der inneren röhrenförmigen Wand (17b) gleichmäßig gehalten wird.

11. Verfahren nach Anspruch 10, wobei das Einfügen der unteren Platte (16) in den Raum (17d) ausgeführt wird durch Anordnen der unteren Platte (16) nahe am Raum (17d) des Gehäuses (17), wobei die innere röhrenförmige Platte (17b) locker in die Öffnung der unteren Platte (16) eingesetzt wird und das Gehäuse (17) mit seiner oberen Platte nach unten ausgerichtet wird und das Gehäuse (17) gerüttelt wird, damit sich die untere Platte (16) um die innere röhrenförmige Platte dreht, bis die untere Platte (16) in den Raum (17d) eingefügt werden kann.

12. Verfahren nach Anspruch 10, wobei das Einfügen der unteren Platte (16) in den Raum (17d) ausgeführt wird durch Aufhängen des Gehäuses (17) und der unteren Platte (16) an einem waagrecht verlaufenden Rundstab (37), der in die Öffnung des Gehäuses und der Platte eingesetzt wird, so daß die untere Platte (16) in der gleichen Stellung angeordnet wird wie der Raum (17d), und die so angeordnete untere Platte (16) nachfolgend entlang des waagrechten Stabes (37) verschoben und in den Raum (17d) eingesetzt wird.

## Revendications

1. Un dispositif pour détecter un changement de pression interne d'un cylindre, comprenant
une tête de cylindre (P) ;
une bougie d'allumage (T) s'étendant axialement et qui comprend une partie périphérique de grand diamètre, une partie périphérique de petit diamètre s'étendant coaxialement depuis un bord de ladite partie de grand diamètre pour former une partie annulaire étagée (t₂) sur ledit bord, et une partie d'extrémité inférieure filetée extérieurement s'étendant coaxialement depuis ladite partie périphérique de petit diamètre ;
un trou d'insertion de bougie (r₁) ménagé dans ladite tête de cylindre (P) pour recevoir une partie de ladite bougie d'allumage (T) ayant une partie taraudée (r₃) adaptée pour venir en engagement de filetage avec ladite partie d'extrémité inférieure filetée de ladite bougie d'allumage (T) et un siège de bougie (r₂) venant en prise avec ladite partie étagée annulaire (t₂) de ladite bougie d'allumage (T) ; et
un capteur annulaire piézoélectrique (S) disposé sur ledit siège de bougie (r₂) et ayant une ouverture dont le diamètre est supérieur à celui de ladite partie périphérique de petit diamètre de ladite bougie d'allumage (T) mais inférieur à sa partie périphérique de grand diamètre, de sorte que ladite bougie d'allumage (T) peut être fixée sur ladite tête de cylindre (P) quand elle est vissée dans ledit trou d'insertion (r₁) de bougie, ledit capteur piézoélectrique (S) étant pressé de manière serrée entre ladite partie annulaire étagée (t₂) de ladite bougie d'allumage (T) et ledit siège de bougie (r₂) dudit trou d'insertion de bougie (r₁) pour détecter un changement de pression à l'intérieur dudit cylindre ;
ledit capteur (S) ayant une périphérie externe telle que quand ladite bougie d'allumage (T) est vissée pour être fixée audit trou de bougie (r₁), une partie de la périphérie externe dudit capteur (S) placé sur ledit siège de bougie (r₂) est amenée en prise avec une périphérie interne dudit trou de bougie (r₁) et est empêchée ainsi de continuer à tourner dans le sens de vissage ;
caractérisé en ce que le capteur piézoélectrique (S) comprend une douille (17) sous la forme d'une bague se composant d'une paire de parois annulaires parallèles de dessus et de dessous (15, 16) et d'une paire de parois tubulaires interne et externe (17a, 17b) et d'un élément piézoélectrique annulaire (12) disposé à l'intérieur de ladite douille, ladite paroi de dessous (16) de ladite douille (17) étant formée en pliant radialement vers l'intérieur une partie d'extrémité de la paroi tubulaire externe et en pliant radialement vers l'intérieur une partie d'extrémité de la paroi tubulaire interne, la largeur de ladite partie pliée (17x) vers l'extérieur étant supérieure à celle de ladite partie pliée (17y) vers l'intérieur de sorte que l'élément piézoélectrique (12) est supporté de manière uniforme par la partie d'extrémité pliée (17x) vers l'extérieur de la paroi tubulaire interne.

2. Un dispositif tel qu'énoncé à la revendication 1, dans lequel ledit capteur (S) présente une périphérie externe polygonale (5(a₁) et ledit trou d'insertion de bougie (r₁) présente une partie périphérique interne polygonale (r₂₂) de sorte que la périphérie externe (5a₁) dudit capteur (S) peut venir en prise avec ladite partie périphérique interne (r₂₂) dudit trou d'insertion de bougie (r₁) lors de sa rotation autour de l'axe (L) de ladite partie taraudée (r₃) dudit trou d'insertion de bougie (r₁).

3. Un dispositif tel qu'énoncé la revendication 1, dans lequel ledit capteur (S) présente une périphérie externe ellipsoïdale (5a₃) et ledit trou d'insertion de bougie (r₁) présente une partie périphérique interne ellipsoïdale (r₂₃), de sorte que la périphérie externe (5a₃) dudit capteur (S) peut venir en prise avec ladite partie périphérique interne (r₂₃) dudit trou d'insertion de bougie (r₁) lors de sa rotation autour de l'axe (L) de ladite partie taraudée (r₃) dudit trou d'insertion de bougie (r₁).

4. Un dispositif tel qu'énoncé à la revendication 1, dans lequel ledit capteur (S) présente une périphérie externe en forme de D (5a₄) et ledit trou d'insertion de bougie (r₁) présente une partie périphérique interne en forme de D (r₂₄), de sorte que la périphérie externe (5a₄) dudit capteur (S) peut venir en prise avec ladite partie périphérique interne (r₂₄) dudit trou d'insertion de bougie (r₁) lors de sa rotation autour de l'axe (L) de ladite partie taraudée (r₃) dudit trou d'insertion de bougie (r1)

5. Un dispositif tel qu'énoncé à la revendication 1, dans lequel la distance entre ladite partie du capteur (S) et l'axe central (L) de ladite partie taraudée (r₃) dudit trou d'insertion de bougie (r₁) est plus longue que la distance entre ledit axe central (L) de ladite partie taraudée (r₃) et de ladite partie périphérique interne dudit trou d'insertion de bougie (r₁), de sorte que ladite partie dudit capteur peut venir en prise avec ladite partie périphérique interne dudit trou d'insertion de bougie lors de sa rotation autour de l'axe de ladite partie taraudée (r₃) dudit trou d'nsertion de bougie (r₁).

6. Un dispositif tel qu'énoncé à la revendication 1, dans lequel ledit trou d'insertion de bougie (r₁) présente une partie périphérique interne dont l'axe central (D) est dévié de l'axe (L) de ladite partie taraudée (r₃) dudit trou de bougie et ledit capteur (S) présente une périphérie externe circulaire sensiblement égale ou légèrement plus petite que ladite partie périphérique interne circulaire dudit trou d'insertion de bougie de sorte que la périphérie externe dudit capteur (S) peut venir en prise avec ladite partie périphérique interne dudit trou d'insertion de bougie (r₁) lors de sa rotation autour de l'axe (L) de ladite partie taraudée (r₃) dudit trou d'nsertion de bougie (r₁).

7. Un dispositif tel qu'énoncé à la revendication 1, dans lequel ledit élément annulaire piézoélectrique (12) est disposé à l'intérieur de ladite douille (17) pour définir un espace (g) entre sa périphérie externe et ladite paroi tubulaire externe (17a) de ladite douille (17) ; et
un câble conducteur (10) est relié électriquement audit élément piézoélectrique (12) à un emplacement adjacent audit espace (g) et s'étendant à travers ladite paroi annulaire de dessus de ladite douille (17).

8. Un dispositif tel qu'énoncé à la revendication 1, dans lequel ledit élément annulaire piézoélectrique (12) est disposé à l'intérieur de ladite douille (17) pour définir un espace (g) entre sa périphérie externe et ladite paroi tubulaire externe (17a) de ladite douille (17), une partie du bord défini par ladite paroi de dessus et ladite paroi externe (17a) étant tronconique à une position adjacente audit espace (g) pour former une surface tronconique (17c) ;
un tuyau de guidage (19) est relié à ladite surface tronconique (17c) et est orienté dans la direction normale par rapport à ladite surface tronconique (17c) ; et
un câble conducteur (20) est relié électriquement audit élément piézoélectrique (12) à un emplacement adjacent audit espace (g) et s'étendant à travers ladite surface tronconique (17c) et à travers ledit tuyau de guidage (19).

9. Un dispositif tel qu'énoncé à la revendication 6, dans lequel ledit élément annulaire piézoélectrique (12) est disposé à l'intérieur de ladite douille (17) pour définir un espace (g) entre sa périphérie externe et ladite paroi tubulaire externe (17a) de ladite douille (17) ; et
une plaque de dessous annulaire (16) est disposée entre ladite paroi de dessous de ladite douille et ledit élément piézoélectrique et s'étendant à travers la surface interne de ladite paroi de dessous ;
une plaque annulaire de dessus (15) est disposée entre ladite paroi de dessus de ladite douille (17) et ledit élément piézoélectrique (12) ; et
un câble conducteur (10) est relié électriquement audit élément piézoélectrique (12) à un emplacement adjacent audit espace et s'étendant à travers une ouverture supérieure (19) prévue dans ladite paroi de dessus,
au moins l'une desdites plaques de dessus et de dessous (15, 16) ayant au moins deux rainures (24) séparées à égale distance angulaire, s'étendant radialement, de sorte que quand ledit capteur est immergé dans une composition de résine liquide, la composition peut s'écouler à travers ladite ouverture supérieure (19) et ladite rainure (24) et peut remplir tout l'espace de ladite douille (17).

10. Un procédé pour la réalisation d'un capteur piézoélectrique, comprenant les étapes de :
créer une douille (17) sous forme d'un anneau ayant une plaque de dessus annulaire et une paire de plaques tubulaires externe et interne (17a, 17b) s'étendant depuis les bords périphériques interne et externe de ladite plaque de dessus, respectivement, dans la direction perpendiculaire à ladite plaque de dessus, lesdits bords interne et externe de ladite plaque de dessus étant de forme circulaire avec le centre dudit bord externe dévié de celui dudit bord interne ;
créer un corps composite annulaire comprenant une couche annulaire d'un élément piézoélectrique (12) ;
créer une plaque annulaire de dessous (16) qui correspond à l'espace annulaire (17d) défini entre lesdites plaques tubulaires externe et interne (17a, 17b) ;
monter ledit corps composite et ladite plaque de dessous (16) dans cet ordre dans l'espace (17d) entre lesdites plaques tubulaires externe et interne (17a, 17b), les ouvertures dudit corps composite et de ladite plaque de dessous (16) étant insérées dans ladite plaque tubulaire interne (17b) ;
plier radialement vers l'extérieur une partie d'extrémité de ladite plaque tubulaire interne (17b) pour recouvrir une périphérie interne de ladite plaque de dessous (16) ; et
plier alors radialement vers l'intérieur une partie d'extrémité de ladite plaque tubulaire externe (17a) pour recouvrir une périphérie externe de ladite plaque de dessous (16), afin de réunir ainsi de manière serrée et solidaire ledit corps composite et ladite plaque de dessous dans ladite douille,
procédé dans lequel la largeur de la partie pliée vers l'extérieur est supérieure à celle de la partie pliée vers l'intérieur, de sorte que l'élément piézoélectrique (12) soit supporté de manière uniforme par la partie d'extrémité pliée vers l'extérieur de la paroi tubulaire interne (17b).

11. Un procédé tel qu'énoncé à la revendication 10, dans lequel ledit montage de ladite plaque de dessous (16) dans ledit espace (17d) est effectué en plaçant ladite plaque de dessous (16) de manière adjacente audit espace (17d) de ladite douille (17), ladite plaque tubulaire interne (17b) étant montée de manière lâche dans l'ouverture de ladite plaque de dessous (16), ladite douille (17) étant placé en présentant sadite plaque de dessus orientée vers le bas, et ladite douille (17) étant mise en vibration pour amener ladite plaque de dessous (16) à tourner autour de ladite plaque tubulaire interne jusqu'à ce que ladite plaque de dessous (16) puisse être montée dans ledit espace (17d).

12. Un procédé tel qu'énoncé à la revendication 10, dans lequel ledit montage de ladite plaque de dessous (16) dans ledit espace (17d) est effectué en suspendant ladite douille (17) et ladite plaque de dessous (16) à une barre ronde (37) s'étendant à l'horizontale insérée dans chacune de ses ouvertures, de sorte que ladite plaque de dessous (16) est placée dans la même attitude que celle dudit espace (17d), ladite plaque de dessous (16) ainsi placée étant déplacée ensuite le long de ladite tige horizontale (37) et insérée dans ledit espace (17d).
